# EUROPÄISCHE PATENTANMELDUNG

(11) **EP 4 572 029 A1**
(43) Veröffentlichungstag der Anmeldung: **18.06.2025**
(21) Anmeldenummer: 24000139.6
(22) Anmeldetag: 29.11.2024
(51) Int. Cl.: H01R 13/11, H01R 13/453

(54) **BERÜHRSCHUTZELEMENT FÜR EINEN STECKVERBINDER**

(30) Priorität: 11.12.2023 DE 102023134637
(71) Anmelder: HARTING Automotive GmbH, 32339 Espelkamp (DE)
(72) Erfinder: Kipp, Tobias, 49549 Ladbergen (DE); Beimdieck, Carsten, 49479 Ibbenbüren (DE); Bitter, Ewald, 32339 Espelkamp (DE)

(57) **Zusammenfassung**

Um eine besonders kompakte Bauform für ein Berührschutzelement (4, 4') eines Autoladesteckers - d. h. einer wallboxmontierbaren Ladedose oder eines Kabelsteckverbinders - mit einem sicherheitstechnisch sowie haptisch besonders wirkungsvollen Kraft-Weg-Diagramm zu erreichen, wird Folgendes vorgeschlagen:
Das Berührschutzelement (4, 4') besteht aus einem elektrisch Isolierendem Material, z. B. Kunststoff. Das Berührschutzelement (4, 4') besitzt mehrere, insbesondere vier, Stifte (41), welche in eine gemeinsame Richtung weisen und über einen Verbindungsabschnitt (44, 44') miteinander mechanisch verbunden sind. Die Stifte (41) sind dafür vorgesehen, durch je einen Buchsenkontakt des Steckverbinders gesteckt zu werden. Weiterhin besitzt das Berührschutzelement (4, 4') zumindest ein Rückstellelement. Das Rückstellelement kann z. B. eine Feder, insbesondere eine Wendelfeder (3) sein. Zusätzlich kann ein zweites Rückstellelement, z.B. eine Magnetanordnung (30, 30') eingesetzt werden, um einen nichtlinearen Verlauf des resultierenden Kraft-Weg-Diagramms zu erzeugen, so dass beim Stecken eines Gegensteckers anfänglich ein Schwellwert, nämlich ein sogenanntes "Losbrechmoment", zu überwinden ist.

## Beschreibung

Die Erfindung geht aus von einem Berührschutzelement für einen Steckverbinder, insbesondere einen Ladesteckverbinder, nach der Gattung des unabhängigen Anspruchs 1.

Des Weiteren geht die Erfindung aus von einem Steckverbinder, der ein solches Berührschutzelement aufweist.

Bei dem Steckverbinder kann es sich insbesondere um einen Ladestecker für Elektrofahrzeuge handeln. Dieser Ladestecker kann als Anbaustecker ausgeführt sein, z. B. für eine sogenannte "Wallbox", d. h. einen wandmontierbaren Anschlusskasten für Kabelstecker und kann anschlussseitig an eine Energiequelle, z. B. an ein Stromnetz oder eine Photovoltaikanlage o. Ä. angeschlossen werden. Der Ladestecker kann aber alternativ dazu auch als mobiler Kabelstecker, z.B. als sogenannter "Autoladestecker" ausgeführt sein, der anschlussseitig zum Anschluss an ein mobiles Ladekabel zur Speisung eines Elektrofahrzeugs eingerichtet ist.

Derartige Berührschutzelemente werden als Berührschutz benötigt, um zu verhindern, dass z. B. Menschen, z. B. mit einem Finger, in Kontakt mit stromführenden Teilen, in diesem Fall Steckkontakten des Steckverbinders, kommen und dadurch einen gesundheitlichen Schaden, insbesondere durch einen sogenannten "elektrischen Schlag" o. Ä. erleiden.

### Stand der Technik

Die Druckschrift DE 10 2022 001 760 A1 offenbart eine Vorrichtung zum Berührschutz eines Ladestecksystems und ein entsprechendes Ladestecksystem zum Laden einer Batterie eines elektrisch betreibbaren Fahrzeugs. Das Fahrzeug besitzt eine Ladebuchse mit Hochvolt-Kontakten, die stromleitende Kontaktflächen aufweisen. Innerhalb der Ladebuchse ist eine Schutzeinrichtung zwischen einer Ausgangsposition und einer Endposition über einen Mechanismus verschiebbar angeordnet. Diese dient zur zumindest teilweisen koaxialen Ummantelung der Hochvolt-Kontakte und ein entsprechendes Ladestecksystem.

Bei diesem Stand der Technik hat sich als nachteilig herausgestellt, dass bei der Konstruktion zu viel Platz verbraucht wird. Naturgemäß ist der verfügbare Platz in einem Steckverbindergehäuse eines Kabelsteckers sowie in einem Anbausteckergehäuse, das für den Einsatz in oder an einer Wallbox vorgesehen ist, äußerst begrenzt. Zudem besitzen Kabelstecker, die zum Laden von E-Autos vorgesehen sind, üblicherweise eine gewinkelte Form ("Revolverstecker") und weisen dadurch weitere Restriktionen bezüglich ihres internen Bauraumes auf.

Aus diesem Grund ist es äußerst schwierig, Vorrichtungen mit diesen bekannten Schutzeinrichtungen in einer gewünscht kompakten Bauform herzustellen.

### Aufgabenstellung

Die Aufgabe der Erfindung besteht darin, ein Berührschutzelement für einen Steckverbinder sowie einen Steckverbinder, aufweisend ein solches Berührschutzelement, in einer möglichst kompakten Bauform anzugeben.

Bevorzugt soll - auch aus Gründen der Haptik aber vor allem auch aus Gründen der Sicherheit von Leib und Leben - bereits beim anfänglichen Stecken eines Gegensteckverbinders eine merkliche Kraft nötig sein, um das Berührschutzelement aus seiner Ausgangslage heraus zu bewegen. Idealerweise kann dabei ein Schwellwert der Kraft ("Losbrechmoment") zu überwinden sein.

Insbesondere soll das Berührschutzelement zudem eine möglichst zuverlässige Rückführung in seine Ausgangslage nach dem Ziehen des Gegensteckverbinders ermöglichen.

Die Aufgabe wird durch den jeweiligen Gegenstand der unabhängigen Ansprüche gelöst.

Ein Berührschutzelement ist zum Einsatz in einem Steckverbinder vorgesehen und besteht aus einem elektrisch Isolierendem Material, z. B. aus Kunststoff. Das Berührschutzelement besitzt mehrere, insbesondere vier, Stifte, welche in eine gemeinsame Richtung weisen und bevorzugt über einen Verbindungsabschnitt miteinander mechanisch verbunden sind.

Das Berührschutzelement besitzt zumindest ein erstes Rückstellelement zum Aufbau einer ersten Rückstellkraft und/oder zumindest ein zweites Rückstellelement zum Aufbau einer zweiten Rückstellkraft beim Verschieben des Berührschutzelements innerhalb des Steckverbinders.

Das vorgenannte Verschieben des Berührschutzelements kann insbesondere durch das Stecken eines Gegensteckverbinders mit dem Steckverbinder erfolgen.

Das erste und/oder das zweite Rückstellelement dient der automatischen Rückführung des gesamten Berührschutzelements durch eine jeweilige Rückstellkraft und insbesondere durch eine daraus resultierende Gesamtrückstellkraft, die ggf. durch eine Summe der ersten und der zweiten Rückstellkraft gebildet ist, in seine Ausgangslage.

Die vorgenannte Rückführung des Berührschutzelements kann insbesondere beim Ziehen des Gegensteckverbinders geschehen.

Das erste und das zweite Rückstellelement können sich vorteilhafterweise unterscheiden. Das erste Rückstellelement kann bezüglich seiner Bewegung aus seiner Ausgangslage heraus z.B. ein lineares Kraft-Weg-Diagramm besitzen und kann dazu bevorzugt als Rückstellfeder, insbesondere als Wendelfeder, ausgeführt sein. Das zweite Rückstellelement kann bezüglich der gleichen Bewegung ein nichtlineares Kraft-Weg-Diagramm, insbesondere aufweisend ein anfangs zu überwindendes Maximum, besitzen und kann dazu bevorzugt als Magnetanordnung, insbesondere entweder als zweiteiliger Permanentmagnet oder als ein Magnet und ein Metallteil, ausgeführt sein.

In jedem Fall kann die Magnetanordnung zweiteilig ausgeführt sein und ein erstes Magnetanordnungsteil sowie ein zweites Magnetanordnungsteil besitzen. Das erste Magnetanordnungsteil wird auch als erster Teil der Magnetanordnung bezeichnet und das zweite Magnetanordnungsteil wird auch als zweiter Teil der Magnetanordnung bezeichnet.

Dadurch kann vorteilhafterweise zum einen durch die Magnetanordnung ein Schwellwert erzeugt werden, welcher beim Stecken des Gegensteckverbinders zunächst überwunden werden muss, damit sich das Berührschutzelement im Steckverbinder aus seiner Ausgangslage bewegt.

Dadurch wird vorteilhafterweise ein sogenanntes "Losbrechmoment" erzeugt, welches dafür sorgt, dass gerade bei dem besonders sicherheitsrelevanten anfänglichen Herausbewegen des Berührschutzelements aus seiner Ruhelage eine besonders hohe Kraft aufgewendet werden muss. Zum anderen kann durch die besagte Rückstellfeder zusätzlich ein zweites, im Wesentlichen lineares Kraft-Weg-Diagramm erzeugt werden, nach dem die aufzuwendende Kraft beim Stecken des Gegensteckers mit zunehmendem Steckweg und dadurch bedingt der zunehmenden Auslenkung des Berührschutzelements linear zunimmt und bei vollständig gestecktem Gegensteckverbinder, also bei maximaler Auslenkung aus seiner Ausgangslage, sein Maximum besitzt, also umgekehrt betrachtet eine maximale Rückstellkraft aufbringt.

Ein Steckverbinder besitzt ein Berührschutzelement der vorgenannten Art. Zudem besitzt der Steckverbinder zumindest ein Gehäuse und einen Kontaktträger. In einer bevorzugten Ausgestaltung können das Gehäuse und der Kontaktträger gemeinsam als ein einstückiges Bauteil, nämlich als Kontaktträgergehäuse, ausgeführt sein.

Der Kontaktträger besitzt als Durchgangsöffnungen ausgeführte Kontaktkammern, welche in einer Steckrichtung verlaufen.

Der Steckverbinder besitzt zumindest vier als Leistungskontakte ausgeführte Buchsenkontakte, die jeweils in einer der Kontaktkammern angeordnet sind. Diese Leistungskontakte sind zur Übertragung elektrischer Energie vorgesehen. Insbesondere können sie zum Anschluss an drei Phasen- und einen Nullleiter dienen. Dazu kann der Steckverbinder noch einen Schutzleiterkontakt sowie ein oder mehrere, insbesondere zwei, Signalkontakte besitzen.

Jeder der Stifte des Berührschutzelements durchgreift in einem ungesteckten Ausgangszustand des Steckverbinders den jeweiligen Buchsenkontakt und ragt dabei steckseitig aus der Kontaktbuchse heraus. Dabei ist das Berührschutzelement, das insbesondere als einstückiges Bauteil ausgeführt sein kann, entlang der Steckrichtung hin zur Anschlussseite gegen die Gesamtrückstellkraft verschiebbar gehalten.

Vorteilhafte Ausgestaltungen der Erfindung sind in den Unteransprüchen und der folgenden Beschreibung angegeben.

Ein besonders großer Vorteil zumindest einer Ausgestaltung der Erfindung besteht darin, dass geleichzeitig zwei verschiedene Rückstellelemente, nämlich das mindestens eine erste und das mindestens eine zweite Rückstellelement, gleichzeitig verwendet werden können, wobei des erste und das zweite Rückstellelement sich in ihrer Wirkungsweise voneinander unterschieden können, indem sie nämlich insbesondere unterschiedliche Kraft-Weg-Diagramme besitzen können. Dadurch ist es einerseits ermöglicht, dass das Berührschutzelement bei seiner maximalen Auslenkung aus seiner Ausgangslage eine hohe Rückstellkraft, z.B. durch das insbesondere als Federelement ausgeführte erste Rückstellelement, erfährt. Außerdem ist es auch möglich, dass das Berührschutzelement auch bei seiner endgültigen Rückführung in seine Ausgangslage, insbesondere auf seinem letzten Wegstück durch das zweite Rückstellelement, welches als zweiteiliger Permanentmagnet ausgeführt sein kann, eine zur besagten Rückführung ausreichend hohe Kraft erfährt.

Weiterhin ist es aus sicherheitstechnischen Gründen besonders wichtig, dass das Berührschutzelement gerade bei anfänglicher Auslenkung aus seiner Ausgangslage eine Kraft erfährt, die hoch genug ist, um eine versehentliche händische Berührung mit dem jeweiligen Kontaktelement zu verhindern und so den gewünschten Berührungsschutz sicher zu gewährleisten.

Beispielsweise kann diese anfängliche Kraft mindestens 10 N ("Newton"), bevorzugt mindestens 15 N, besonders bevorzugt mindestens 20 N, also z.B. 25 N und mehr betragen. Idealerweise kann so das besagte Losbrechmoment erzeugt werden, das für eine besonders hohe Berührschutzsicherheit sorgt.

Als zusätzlicher Vorteil ist dadurch auch im Steckvorgang eine vorteilhafte Haptik erzeugbar, welche dem Benutzer den Steckvorgang insbesondere für hohe Stromstärken und/oder hohe elektrische Spannungen mittels einer anfänglichen Überwindung eines vergleichsweise hohen Schwellwerts und eines darauffolgenden stetigen vergleichsweise leichten Anstiegs intuitiv erfassbar macht.

Diese kann bevorzugt dadurch entstehen, dass die Rückstellkraft beim Stecken eines Gegensteckverbinders anfangs den durch das zweite Rückstellelement erzeugten Schwellwert / das Losbrechmoment überschreitet, und dass zudem durch das erste Rückstellelement beim darauffolgenden Ziehen des gesteckten Gegensteckverbinders bei der maximalen Auslenkung die Rückstellkraft ausreichend hoch ist, um auftretende Reibungskräfte, insbesondere eine auftretende Haftreibungskraft, zum Zweck der Rückführung des Berührschutzelements in seine Ausgangslage zu überwinden.

Das Berührschutzelement besitzt den Vorteil der Platzersparnis, denn es ist schlank aufgebaut. Insbesondere gilt dies im Vergleich zu einem weniger vorteilhaften Berührschutz, der als massiver Block ausgeführt ist, welcher Durchgangsbohrungen besitzt, mit denen er die Steckkontakte - in diesem Fall die Buchsenkontakte - umgreift.

Ein weiterer Vorteil besteht darin, dass zudem gerade bei einem besonders großen Schiebeweg ebenfalls eine hohe Rückstellkraft erzeugt wird, die auch bei komplexen Bauformen in der Lage ist, eine im gesteckten Zustand ggf. auftretende hohe Haftreibung zu überwinden und somit nach dem Ziehen des Gegensteckers das Berührschutzelement sicher in seine Ausgangslage zurück zu überführen. Auch wird durch die besagt hohe Rückstellkraft Spielraum für weitere konstruktionstechnische Details geschaffen, da auftretende Reibungskräfte dadurch sicher überwunden werden können.

Vorteilhafterweise verhindert das Berührschutzelement eine händische Berührung mit dem jeweiligen Steckkontakt. Die Kraft, insbesondere der besagte anfängliche Schwellwert der Rückstellkraft des Rückstellelements ist bei der Verschiebung aus seiner Ausgangslage so groß, dass ein solcher händischer elektrischer Kontakt ausgeschlossen ist.

Das erste und das zweite Rückstellelement dienen somit der automatischen Rückführung des gesamten Berührschutzelements, insbesondere durch die Summe der ersten und der zweiten Rückstellkraft in seine Ausgangslage.

Diese Rückführung kann insbesondere beim Ziehen des Gegensteckverbinders geschehen.

Das erste und das zweite Rückstellelement können sich unterscheiden. Das erste Rückstellelement kann ein lineares Kraft-Weg-Diagramm besitzen und kann bevorzugt als Federelement und somit insbesondere als Rückstellfeder, insbesondere als Wendelfeder, ausgeführt sein. Das zweite Rückstellelement kann ein nichtlineares Kraft-Weg-Diagramm besitzen und bevorzugt als Magnetanordnung, insbesondere z.B. als zweiteiliger Permanentmagnet oder z.B. als Kombination aus einem Permanentmagneten und einem Metallteil ausgeführt sein.

Ist die Magnetanordnung als zweiteiliger Permanentmagnet ausgeführt, so ist sowohl das erste als auch das zweite Magnetanordnungsteil jeweils ein Permanentmagnet. Vorteilhafterweise sind dann - je nach Relativausrichtung - sowohl anziehende als auch abstoßende Kräfte erzeugbar.

Ist die Magnetanordnung als Kombination aus einem Permanentmagneten und einem Metallteil ausgeführt, so ziehen sich diese grundsätzlich an.

Das Berührschutzelement besitzt den Vorteil der Platzersparnis, denn es ist schlank aufgebaut. Insbesondere gilt dies im Vergleich zu einem weniger vorteilhaften Berührschutz, der als massiver Block ausgeführt ist, welcher Durchgangsbohrungen besitzt, mit denen er die Leistungskontakte - in diesem Fall die Buchsenkontakte - umgreift.

In einer bevorzugten Ausgestaltung kann das Berührschutzelement einstückig, insbesondere einteilig, z.B. als Spritzgussteil, ausgeführt sein.

Dies hat den besonders großen Vorteil, dass die Kraft des Rückstellelements wie zuvor erwähnt einerseits groß genug ist, um eine händische Berührung mit dem Buchsenkontakt zu verhindern und andererseits klein genug ist, um den Steckvorgang problemlos zu ermöglichen. Durch die Einstückigkeit - oder zumindest Einteiligkeit - ist vorteilhafterweise jeder Einzelkontakt mit der gesamten Rückkstellkraft beaufschlagt, was einen deutlichen Vorteil gegenüber einer weniger vorteilhaften Ausgestaltung aufweist, bei welcher z.B. jeder Stift zumindest ein eigenes Rückstellelement besitzt.

In dieser vorgenannten, diesbezüglich also weniger vorteilhaften, aber dafür möglicherweise noch schlankeren Ausgestaltung, könnte das Berührschutzelement auch mehrstückig ausgeführt sein. Dann könnte, im Gegensatz zur vorgenannten Variante, also jeder einzelne Stift ein eigenes Rückstellelement besitzen. Dieses müsste dann aus Sicherheitsgründen für jeden einzelnen Stift dann aber auch eine Rückstellkraft aufbringen, welche die händische Berührung verhindert. Die Summe dieser Rückstellkräfte wäre dann beim Stecken zu überwinden. Dies würde bedeuten, dass beispielsweise bei vier hochstromfähigen Buchsen, welche z. B. drei Phasen und einen Nullleiter repräsentieren, beim Stecken zumindest die vierfache Kraft aufgebracht werden müsste, um die vier, in diesem Fall einzelnen Stifte eines entsprechend mehrstückigen Berührschutzelements in Richtung des Kabelanschlussbereichs zu verschieben.

In einer vorteilhaften Ausgestaltung besitzt der Steckverbinder anschlussseitig ein mit einer Halteklammer auf das Gehäuse anbringbares - z.B. aufrastbares oder anschraubbares - Erweiterungselement, durch das der Bauraum des Steckverbinders so weit wie nötig erweitert wird, um die oben beschriebene Funktion des Berührschutzelements zu realisieren. Das jeweilige Rückstellelement, insbesondere das Federelement und/oder die Magnetanordnung, sofern sie aus zwei sich abstoßend eingerichteten Permanentmagneten besteht, kann sich beim Aufbau der Rückstellkraft an einer Rückwand des Erweiterungselements abstützen, während das Rückstellelement in entgegengesetzter Richtung die besagte Rückstellkraft auf das gegebenenfalls aus seiner Ausgangslage entlang der Steckrichtung zur Kabelanschlussseite hin verschobenen Berührschutzelement ausübt. Die Magnetanordnung kann aber auch verwendet werden, wenn sie zwei einander anziehend eingerichteten Permanentmagneten aufweist oder auch wenn sie einen Permanentmagneten und ein Metallteil aufweist, indem mindestens ein Magnetanordnungsteil z. B am Kontaktträgergehäuse und das jeweils andere Magnetanordnungsteil am Berührschutzelement befestigt ist.

In einer weiteren vorteilhaften Ausgestaltung besitzt das Berührschutzelement in seinem Verbindungsabschnitt zumindest eine Führungsöffnung, bevorzugt mehrere Führungsöffnungen und insbesondere genau zwei Führungsöffnungen. Zudem besitzt das Berührschutzelement mehrere - insbesondere separate - Führungsstifte, von denen je einer in jeweils einer der Führungsöffnungen verschiebbar gehalten ist. An jedem der Führungsstifte kann ein erstes Rückstellelement angeordnet und gehalten sein, wobei es sich bei dem ersten Rückstellelement bevorzugt um die besagte Wendelfeder handelt. Diese Wendelfeder kann sich einerseits am Verbindungsabschnitt und andererseits an der vorgenannten Rückwand abstützen.

### Ausführungsbeispiel

Ein Ausführungsbeispiel der Erfindung ist in den Zeichnungen dargestellt und wird im Folgenden näher erläutert. Es zeigen:
- Fig. 1a - g: einen als Anbaustecker ausgeführten Ladesteckverbinder, aufweisend ein Berührschutzelement, in unterschiedlichen Darstellungen;
- Fig. 2: ein Berührschutzelement;
- Fig. 3a, b: den Ladesteckverbinder mit dem Berührschutzelement in einer Explosionsdarstellung in zwei verschiedenen Ausführungen;
- Fig. 4a-g: ein Berührschutzelement mit einer Magnetanordnung, zwei Führungsstiften und zwei Wendelfedern;
- Fig. 5a-c: den Steckverbinder mit dem Berührschutzelement in seiner Ausgangslage und in seinem maximal ausgelenkten Zustand sowie einem Akuator;
- Fig. 6: ein Kraft-Weg-Diagramm für eine Wendelfeder als erstes Rückstellelement und eine Magnetanordnung als zweites Rückstellelement, und
- Fig. 7: einen als Kabelstecker ausgeführten Ladesteckverbinder.

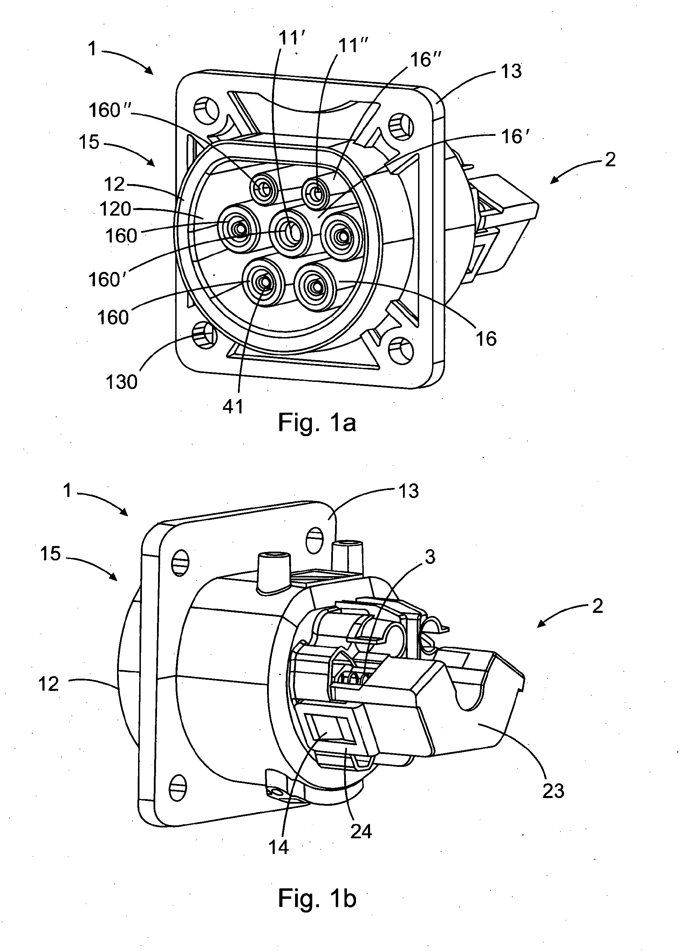

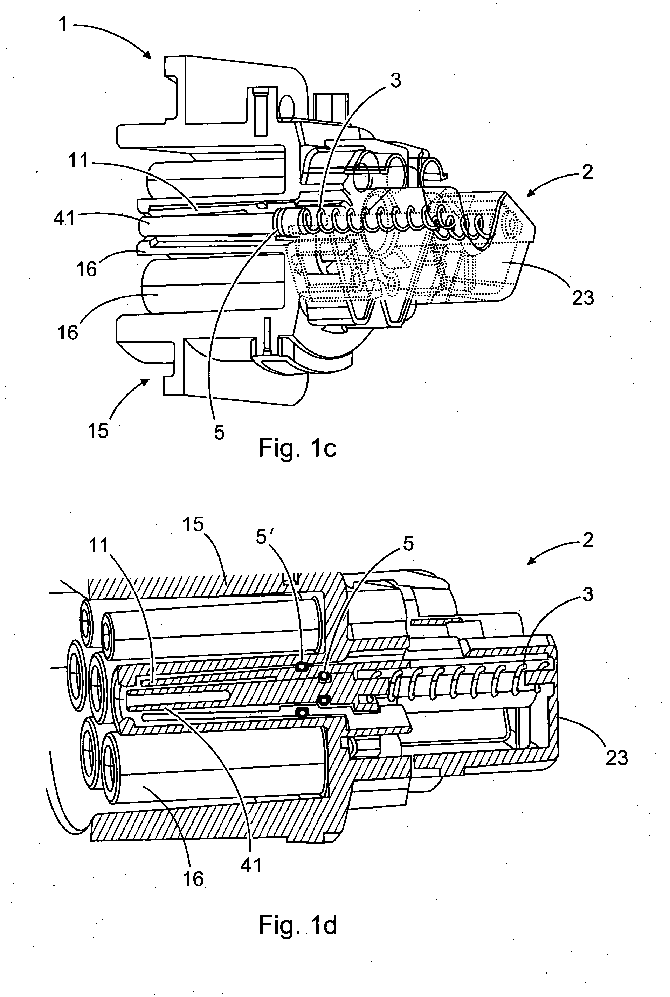

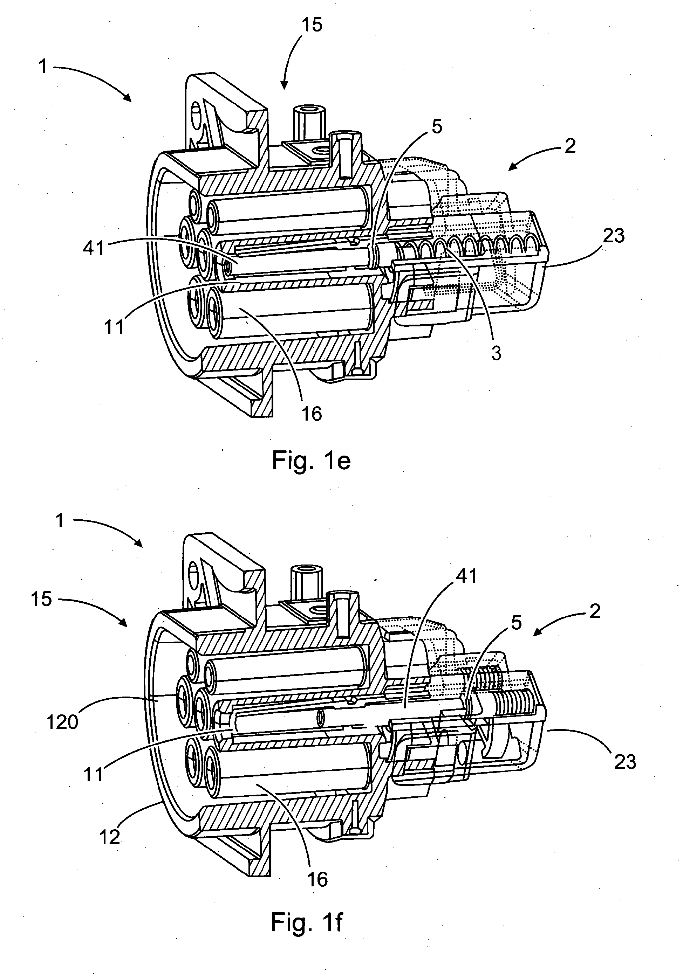

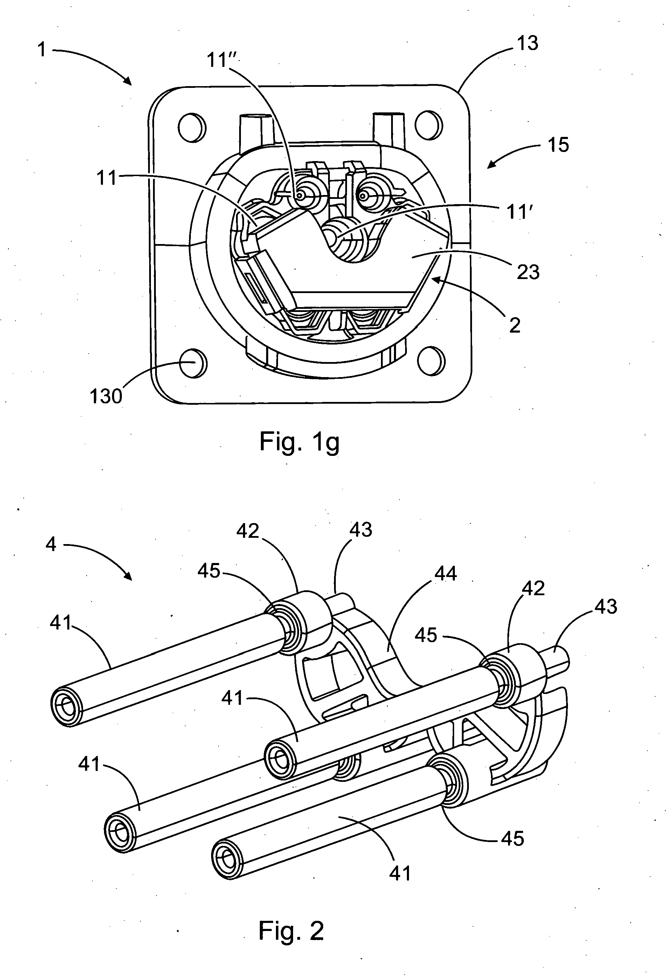

Die Fig. 1 a bis g zeigen einen Steckverbinder 1, insbesondere Ladesteckverbinder 1, der als Anbaustecker ausgeführt ist. Dieser Ladesteckverbinder 1 besitzt ein Kontaktträgergehäuse 15, das einteilig ausgeführt ist und gleichzeitig - zumindest funktional - sowohl einen Kontaktträger als auch ein Gehäuse aufweist. Das Gehäuse besitzt einen Anbauflansch 13 mit Befestigungsöffnungen 130 zum Anbau an eine Gehäusewand z. B. einer Wallbox. Weiterhin besitzt das Kontaktträgergehäuse 15 einen Kragen 12, durch den eine Stecköffnung 120 gebildet ist.

Der Kontaktträger besitzt als in einer Steckrichtung verlaufende Durchgangsöffnungen ausgeführte Kontaktkammern 160, 160', 160". Diese durchgehenden Kontaktkammern 160, 160', 160" sind im Bereich der Stecköffnung 120 jeweils von je einer hohlzylindrischen Anformung 16, 16', 16" umgeben.

In den Kontaktkammern 160, 160', 160" sind Steckkontakte, nämlich im Einzelnen vier Leistungskontakte 11, ein Schutzleiterkontakt 11' sowie zwei Signalkontakte 11" angeordnet. In der Fig. 1a sind allerdings die Leistungskontakte 11 nicht zu sehen, da sie in dieser Darstellung von Stiften 41 eines Berührschutzelements 4 (vgl. Fig.2) optisch verdeckt sind.

Weiterhin besitzt der Steckverbinder ein Erweiterungselement 2. Dieses Erweiterungselement 2 besitzt an zwei einander gegenüberliegenden Seiten je eine Rastlasche 24, die ein Rastfenster (nicht bezeichnet) aufweist.

Dazu besitzt das Gehäuse eine passende Rastanformung 14.

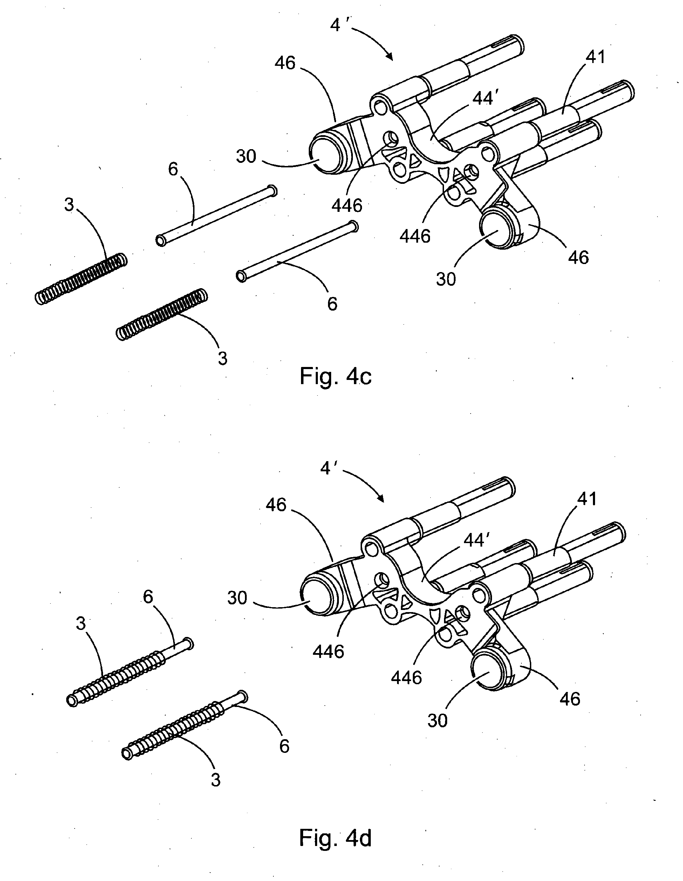

Das Erweiterungselement 2 besitzt eine Rückwand 23. Wie in der Fig. 4d besonders gut zu sehen ist, stützt sich ein zumindest teilweise innerhalb des Erweiterungselements 2 angeordnetes erstes Rückstellelement, in diesem Fall handelt es sich dabei um zumindest eine Rückstellfeder 3, mit ihrem ersten Ende ab.

Mit ihrem zweiten Ende, welches dem ersten Ende gegenüber liegt, ist die zumindest eine Rückstellfeder 3 an dem Berührschutzelement 4 angeordnet. Dabei umgreift die zumindest eine Rückstellfeder, bei der es sich in diesem Beispiel um die mindestens eine Wendelfeder 3 handelt, einen Halteabschnitt 43 des Berührschutzelements 4 und stößt dabei mit ihrem ersten Ende an einen Anschlag 42 (in Fig. 2 explizit bezeichnet) des Berührschutzelements 4.

Weiterhin sind in der Fig. 1d zwei Dichtungsringe im Schnitt angedeutet, nämlich ein erster Dichtungsring 5 und ein zweiter Dichtungsring 5'.

Der erste Dichtungsring 5 ist zudem auch in der Fig. 1e besonders gut zu sehen. Der erste Dichtungsring 5 dichtet den jeweiligen Stift 41 gegen den als Buchsenkontakt ausgeführten Leistungskontakt 11 aus dem Inneren des Buchsenkontakts heraus ab. Dies hat den zusätzlichen, besonderen Vorteil, dass auch im ungesteckten Zustand kein Schmutz, Staub oder Feuchtigkeit durch das Innere des als Buchsenkontakt ausgeführten Leistungskontakts 11 in das Steckverbindergehäuse eindringen kann.

In der Fig. 2 ist das Berührschutzelement 4 als Einzelteil gezeigt. Es besitzt vier im Wesentlichen zylinderförmig ausgeführte Stifte 41, die in eine gemeinsame Richtung weisen, wobei diese gemeinsame Richtung im montierten Zustand der Steckrichtung des Steckverbinders entspricht.

Anschlussseitig sind die Stifte 41 über einen Verbindungsabschnitt 44 miteinander zumindest einstückig, insbesondere einteilig, verbunden. Im vorliegenden Beispiel ist das Berührschutzelement 4 sogar einteilig ausgeführt, also z. B. in einem einzigen Spritzgussvorgang als ein einziges durchgehendes Spitzgussteil ausgeführt. Das Berührschutzelement 4 könnte aber in einer Variante auch aus mehreren Teilen bestehen, die zu einem Stück zusammengesetzt, z. B. aneinander verclipst oder anderweitig aneinander befestigt sind.

Alle vier Stifte 41 besitzen an ihrem anschlussseitigen Ende zunächst eine als umlaufende Rille ausgeführte Dichtungsnut 45 zur Aufnahme des jeweiligen ersten Dichtungsrings 5 (vgl. Fig. 1d).

Die beiden in der Zeichnung oben dargestellten Stifte 41 besitzen zudem einen als zylinderförmige Verdickung ausgeführten Anschlag 42, sowie einen daran anschließenden, den Stift wieder verschmalernden, zylinderförmig ausgeführten und in der besagten gemeinsamen Richtung weitergeführten Halteabschnitt 43, welcher gleichzeitig das anschlussseitige Ende des jeweiligen Stiftes 41 bildet.

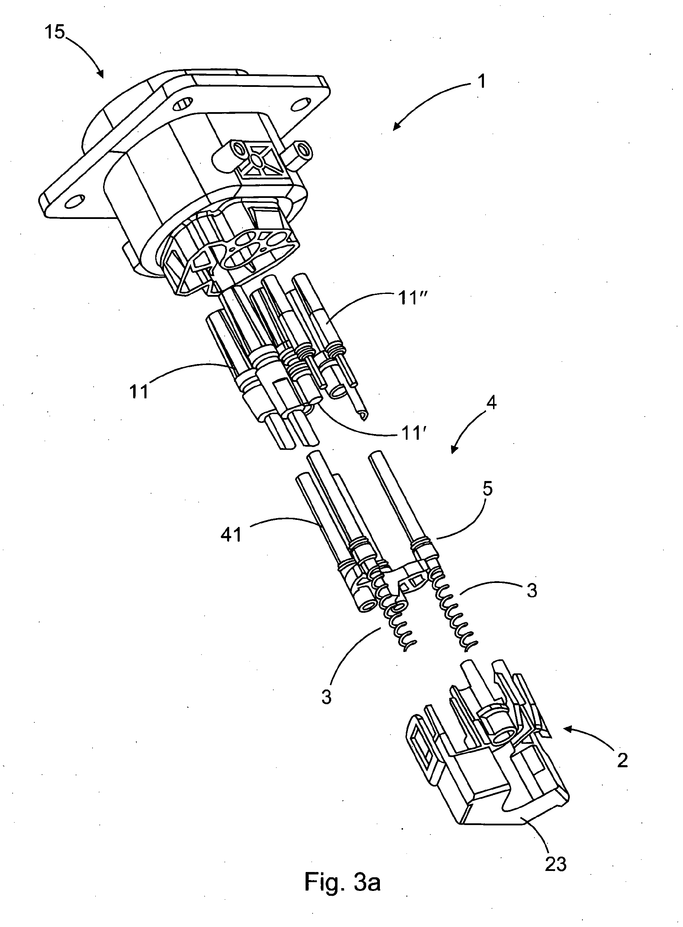

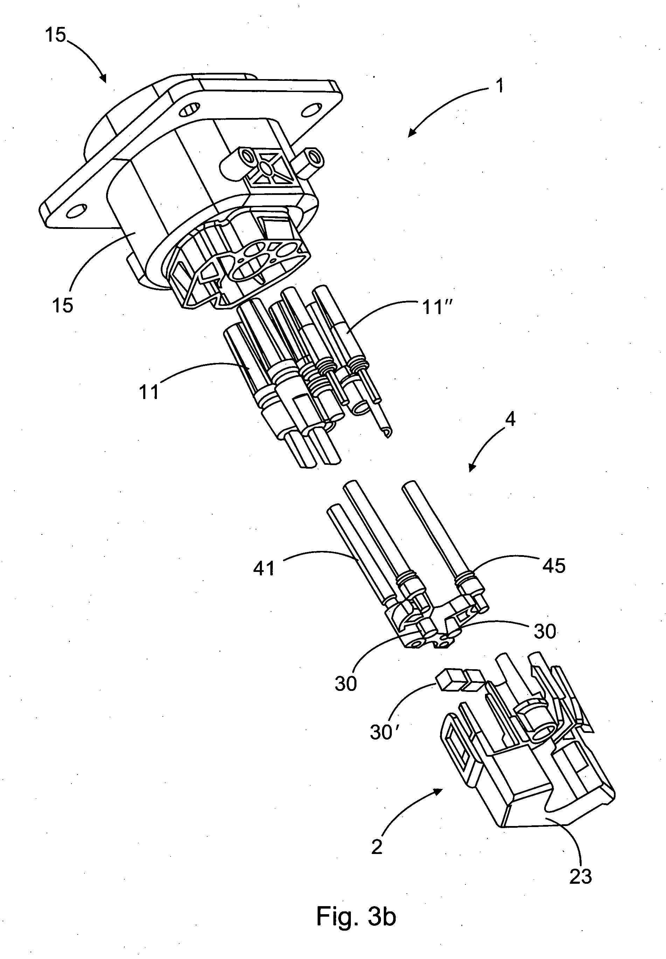

Wie in der Fig. 3a gut zu sehen ist, kann die als Wendelfeder ausgeführte Rückstellfeder 3 mit ihrem zweiten Ende auf diesen Halteabschnitt 43 aufgesteckt werden/sein. Des Weiteren zeigt die Fig. 3a, wie auch die Fig. 3b je eine Explosionsdarstellung des Steckverbinders mit dem Kontaktträgergehäuse 15 mit den darin angeordneten Kontaktkammern 160, 160', 160". Weiterhin sind die in die Kontaktkammern 160, 160', 160" einzufügenden verschiedenen Steckkontakte 11, 11', 11" gezeigt. In die Leistungskontakte 11 sind wiederum die Stifte 41 des Berührschutzelements 4 einzufügen. An diesen Stiften 41 sind die Dichtungsringe 5 angeordnet. An zwei der Stifte 41 sind zwei auf deren jeweiligen Halteabschnitt 43 aufgesteckte Teilen des jeweiligen Rückstellelements 3, 30 gezeigt, nämlich in der Fig. 3a das zweite Ende der jeweiligen Rückstellfeder 3 als eine mögliche Ausführungsform und in Fig. 3b je ein zweites Magnetanordnungsteil 30, d.h. ein zweiter Teil einer jeweiligen Magnetanordnung, wobei ein erster Magnetanordnungsteil 30', d.h. ein erster Teil 30' der Magnetanordnung, in dem Erweiterungselement 2 angeordnet ist und sich von innen an dessen Rückwand 23 abstützt, um mit seiner, den zweiten Magnetanordnungsteil 30 abstoßenden Magnetkraft für die rückstellende Kraft zu sorgen.

Im Folgenden ist das Berührschutzelement 4' in einer weiteren Ausführung gezeigt.

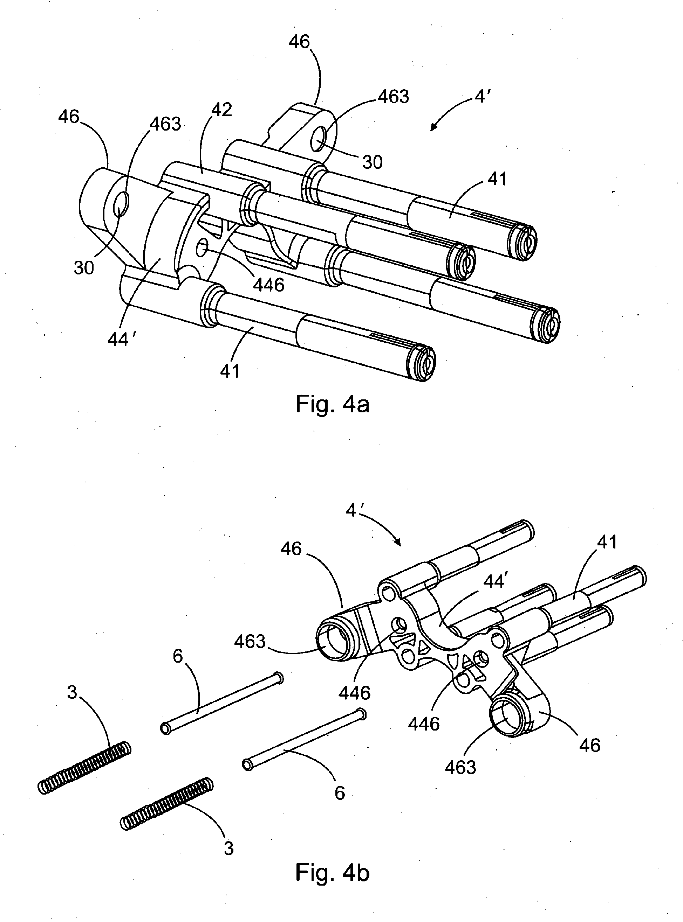

Die Fig. 4a zeigt dieses anders ausgeführte Berührschutzelement 4' in einer ersten schrägen steckseitigen Draufsicht, also mit Blick auf die Stifte 41. Der Verbindungsabschnitt 44 ist, verglichen mit der vorherigen Ausführung, massiver ausgeführt, d.h. der Verbindungsabschnitt 44 weist weniger Fenster, also eine insgesamt größere Fläche auf. Stattdessen besitzt er aber zwei Führungsöffnungen 446.

Daraus ist ersichtlich, dass das Berührschutzelement 4' mehrere - nämlich zwei - Halterungen 46 besitzt, die beidseitig an den Verbindungsabschnitt 44 angeformt sind und die in unterschiedliche Richtungen weisen. In jeder Halterung 46 befindet sich eine Magnetaufnahme 463 für den zweiten Teil 30 der Magnetanordnung 30, 30'. In der vorliegenden Darstellung ist in der Magnetaufnahme 463 bereits der zweite Teil 30 der Magnetanordnung eingefügt. Desweiteren sind in dem Verbindungsabschnitt 44 zwei Führungsöffnungen 446 angeordnet, von denen hier nur eine zu sehen ist, weil die andere von den Stiften 41 verdeckt ist.

Die Fig. 4b zeigt das Berührschutzelement 4' in einer schrägen Draufsicht von der entgegengesetzten Seite. In dieser Darstellung sind daher beide Führungsöffnungen 446 zu sehen. Die Magnetaufnahmen 463 sind in dieser Darstellung leer, d.h. es ist kein zweiter Teil 30 der jeweiligen Magnetanordnung 30, 30' darin aufgenommen.

Weiterhin sind zwei Führungsstifte 6 gezeigt, welche dafür vorgesehen sind, in die Führungsöffnungen 446 gesteckt und darin geführt zu werden. Weiterhin ist zu jedem Führungsstift 6 ein erstes Rückstellelement 3, ausgeführt als eine Wendelfeder, gezeigt, welche dafür vorgesehen ist, auf den jeweiligen Führungsstift 6 gesteckt zu werden.

Die Fig. 4c zeigt dieselbe Anordnung, wobei jedoch der zweite Teil 30 der jeweiligen Magnetanordnung 30, 30' in der jeweilige Magnetaufnahme 463 aufgenommen. ist.

In der Fig. 4d wurden die Wendelfedern 3 auf die Führungsstifte 6 gesteckt.

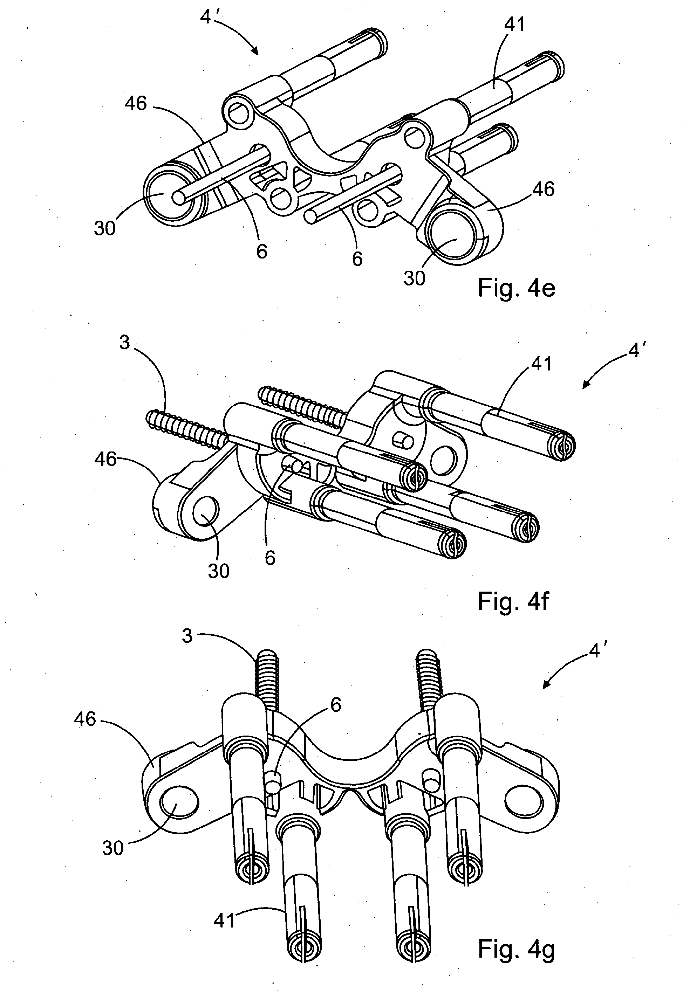

Die Fig. 4e zeigt dieselbe Anordnung, wobei die Führungsstifte 6 ohne die Wendelfedern 3 durch die Führungsöffnungen 446 verlaufen.

Die Fig. 4f und 4g zeigen die Anordnung in zwei verschiedenen Blickwinkeln aus steckseitiger Richtung und ergänzen sie noch dadurch, dass die Wendelfedern 3 aus anschlussseitiger Richtung auf die Führungsstifte 6 gesteckt sind. Dabei schlagen die Wendelfedern 3 an der aus diesen Blickwinkeln verdeckten Seite mit einem Ende an den Verbindungsabschnitt 44 an.

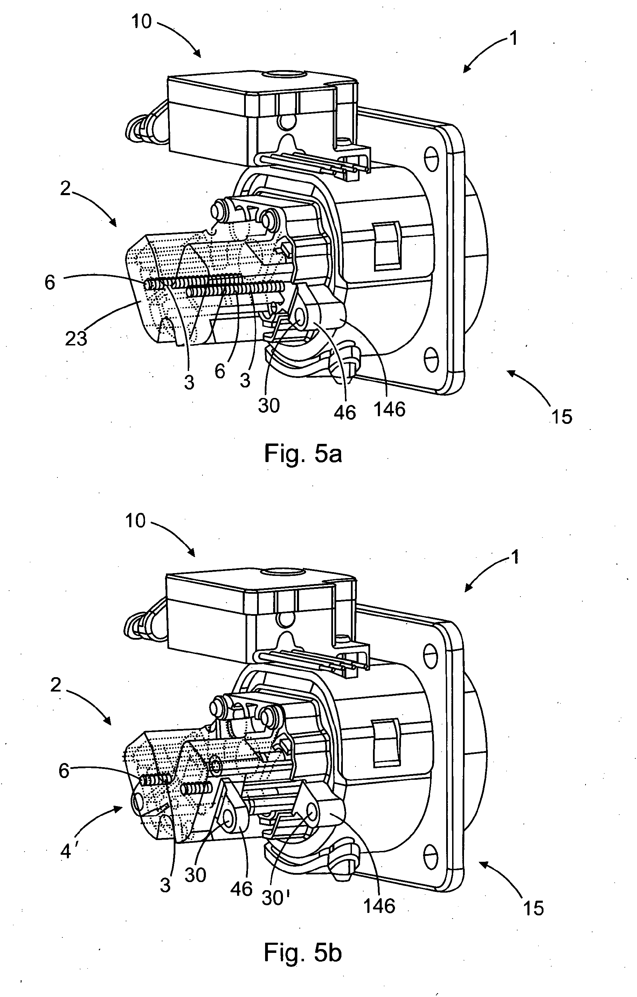

Die Fig. 5a - 5c zeigen den Steckverbinder 1 mit dem daran angebrachten, in diesem Fall angeschraubten, Erweiterungselement 2 und dem darin integrierten Berührschutzelement 4'. Dabei zeigen die Fig. 5a und 5b zusätzlich einen auf den Steckverbinder aufgerasteten Aktuator 10.

In der Fig. 5a befindet sich das Berührschutzelement 4' (hier aus Übersichtlichkeitsgründen nicht bezeichnet) in seiner Ausgangslage. Daher sind auch die Wendelfedern 3, die sich an der Rückwand 23 abstützen, maximal entspannt. Die Stifte 41 des Berührschutzelements 4 durchgreifen dabei je einen als Buchsenkontakt ausgeführte Leistungskontakt 11 und sorgen so steckseitig für einen sicheren Berührschutz. Gleichzeitig weist der zweite Magnetanordnungsteil 30 mit dem ersten Magnetanordnungsteil 30' (hier nicht zu sehen) den geringstmöglichen Abstand auf, so dass eine Magnetfeldkraft Fe, welche das Berührschutzelement 4' am Steckverbinder 1 in seiner Ausgangslage hält, maximal ist. Die Federkraft Fs des als Wendelfeder ausgeführten ersten Rückstellelements 6, welche funktional im Wesentlichen zur Rückstellung des Berührschutzelements vorgesehen ist, kann hierzu einen geringen Beitrag leisten.

Bei dem ersten Magnetanordnungsteil 30' handelt es sich in dieser Ausführung um einen Permanentmagneten und das zweite Magnetanordnungsteil 30 ist ein Metallteil. In einer anderen Ausführung könnte es sich bei dem ersten Magnetanordnungsteil 30' um ein Metallteil und bei dem zweiten Magnetanordnungsteil 30 um einen Permanentmagneten handeln.

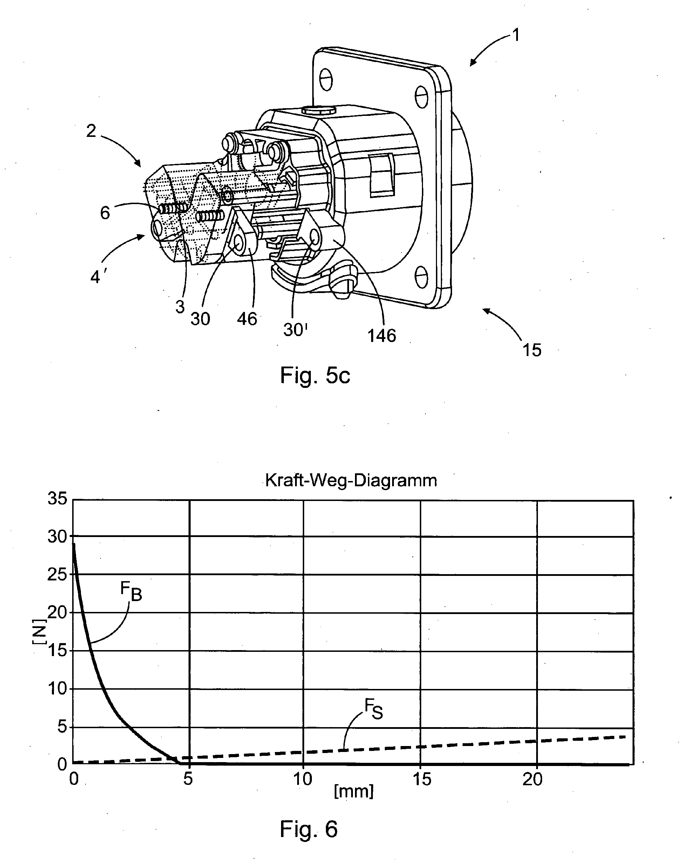

In den Fig. 5b und 5c befindet sich das Berührschutzelement 4' dagegen im Bereich seiner maximalen Auslenkung. Dabei sind die Wendelfedern 3 maximal komprimiert. Gleichzeitig sind die Magnetanordnungsteile 30, 30' maximal voneinander entfernt. In dieser Darstellung ist sowohl der in der Halterung 46 gehaltene zweite Magnetanordnungsteil 30' (Permanentmagnet) als auch der in einer Basishalterung 146 des Steckverbinders 1 gehaltene erste Magnetanordnungsteil 30' (Metallteil) gut zu sehen. Allerdings ist deren genseitige Anziehungskraft aufgrund ihres hohen Abstandes nur sehr gering. Die Federkraft Fs ist in dieser Stellung maximiert.

Die Fig. 6 zeigt ein Kraft-Weg-Diagramm, aus dem der Verlauf der zweiten Rückstellkraft Fe, dargestellt durch den durchgehend dargestellten Kurvenverlauf, und der ersten Rückstellkraft Fs, dargestellt durch den gestrichelt dargestellten Kurvenverlauf, hervorgeht. Es ist offensichtlich, dass zur anfänglichen Verschiebung des Berührschutzelements zur Erzeugung eines sogenannten "Losbrechmoments" ein anfänglicher Schwellwert der Kraft F_{B} von etwa 28 N ("Newton") überwunden werden muss, welcher durch die Magnetanordnung erzeugt wird. Weiterhin wird offensichtlich, dass im Bereich der maximalen Auslenkung, wie er beispielsweise in den Fig. 5b und 5c dargestellt ist, die zweite Rückstellkraft, d.h. hier die Magnetkraft Fs äußerst gering ist, dafür jedoch die erste Rückstellkraft, also hier die Federkraft Fs, ausreichend hoch ist, um die Rückführung des Berührschutzelements 1 zu gewährleisten.

Dies unterstreicht die besonders vorteilhafte Wirkungsweise der Kombination der Wendelfedern als erstem Rückstellelement 3 mit der Magnetanordnung 30, 30' als zweiten Rückstellelement 30, 30'.

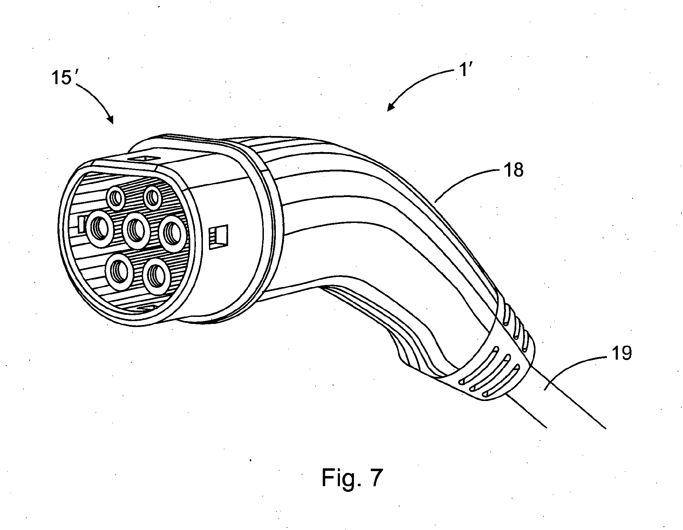

Die Fig. 7 zeigt einen als Kabelsteckverbinder 1' ausgeführten Steckverbinder mit einem Kontaktträgergehäuse 15', einem Griff 18, der in Revolverform ausgeführt ist, und einem anschlussseitig daran angeschlossenen Kabel 19. In diesen Kabelsteckverbinder 1' ist ein Berührschutzelement 4' in der vorgenannten Weise integriert.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

Desweiteren sind folgende Ausführungen offenbart:
Ausführung 1: Berührschutzelement (4) für einen Steckverbinder (1, 1'), wobei das Berührschutzelement (4) aus zumindest einem elektrisch isolierenden Material besteht und Folgendes aufweist:
   - mehrere Stifte (41) zur zumindest teilweisen Anordnung innerhalb elektrischer Leistungskontakte (11) des Steckverbinders zur Herstellung eines elektrischen Berührschutzes gegen elektrische händische Berührung mit zumindest einem dieser Leistungskontakte (11) in einer Ausgangslage des Berührschutzelements (4) im Steckverbinder (1, 1');
   - einen Verbindungsabschnitt (44) zur Positionierung und Fixierung der Stifte (41);
   - zumindest ein Rückstellelement (3, 30, 30') zum Aufbau einer Rückstellkraft beim Verschieben des Berührschutzelements (4) innerhalb des Steckverbinders (1, 1') beim Steckvorgang und zur automatischen Rückführung des gesamten Berührschutzelements (4) nach dem Steckvorgang in seine Ausgangslage.
Ausführung 2: Berührschutzelement (4) gemäß Ausführung 1, wobei das Berührschutzelement (4) einstückig ausgeführt ist.
Ausführung 3: Berührschutzelement (4) gemäß einer der Ausführungen 1 bis 2, wobei das Berührschutzelement (4) einteilig ausgeführt ist.
Ausführung 4: Berührschutzelement (4) gemäß einer der Ausführungen 1 bis 3, wobei das Berührschutzelement (4) als Spritzgussteil ausgeführt ist und aus Kunststoff besteht.
Ausführung 5: Berührschutzelement (4) gemäß einer der Ausführungen 1 bis 4, wobei jedes Rückstellelement als Wendelfeder (3) oder als zweiteiliger Permanentmagnet (30, 30') ausgeführt ist.
Ausführung 6: Berührschutzelement (4) gemäß einer der Ausführungen 1 bis 5, wobei das Berührschutzelement (4) vier Stifte (41) besitzt, von denen zwei mit je einem Rückstellelement (3, 30) in mechanischem Kontakt stehen und zusammenwirken.
Ausführung 7: Berührschutzelement (4) gemäß einer der Ausführungen 1 bis 6, wobei das Berührschutzelement (4) für jeden Stift (41) einen ersten Dichtungsring (5) besitzt, und wobei jeder Stift (41) eine umlaufende Dichtungsnut (45) zur teilweisen Aufnahme des jeweiligen Dichtungsrings (5) besitzt.
Ausführung 8: Berührschutzelement (4) gemäß einer der Ausführungen 6 bis 7, wobei zumindest zwei der Stifte (41) je einen Anschlag (42) und je einen an den Anschlag (42) anschließenden Halteabschnitt (43) zum Zusammenwirken mit dem Rückstellelement (3, 30, 30') besitzen.
Ausführung 9: Steckverbinder 1, 1' aufweisend ein Berührschutzelement (4) gemäß einer der Ausführungen 1 bis 8, wobei der Steckverbinder (1, 1') weiterhin zumindest Folgendes besitzt:
   - ein Gehäuse und
   - einen Kontaktträger,
   - als Durchgangsöffnungen ausgeführte Kontaktkammern (160), welche in eine Steckrichtung verlaufen;
   - zumindest vier als Buchsenkontakte ausgeführte elektrische Leistungskontakte (11), die jeweils in einer der Kontaktkammern (160) angeordnet sind und zur Übertragung elektrischer Energie dienen, wobei
   - jeder der Stifte (41) des Berührschutzelements (4) in einem ungesteckten Ausgangszustand des Steckverbinders (1) die jeweilige Kontaktbuchse (11) durchgreift und steckseitig aus der Kontaktbuchse (11) herausragt, wobei das gesamte Berührschutzelement (4) entlang der Steckrichtung hin zur Anschlussseite entgegen einer Rückstellkraft des Rückstellelements (3, 30, 30') verschiebbar gehalten ist.
Ausführung 10: Steckverbinder (1, 1') gemäß Ausführung 9, wobei das Gehäuse und der Kontaktträger gemeinsam als ein einstückiges Bauteil, nämlich als Kontaktträgergehäuse (15), ausgeführt sind.
Ausführung 11: Steckverbinder (1, 1') gemäß Ausführung 10, wobei der Steckverbinder (1, 1') als Ladesteckverbinder ausgeführt ist und zusätzlich noch einen Schutzleiterkontakt (11') sowie zwei Signalkontakte (11") besitzt.
Ausführung 12: Steckverbinder (1, 1') gemäß einer der Ausführungen 10 bis 11, wobei der Steckverbinder (1, 1') zusätzlich ein Erweiterungselement (2) besitzt, welches zur kabelanschlussseitigen Erweiterung des Gehäuses dient.
Ausführung 13: Steckverbinder gemäß Ausführung 12, wobei das Erweiterungselement (2) kabelanschlussseitig an das Kontaktträgergehäuse (15) anfügbar und zur Befestigung am Kontaktträgergehäuse (15) auf das Kontaktträgergehäuse (15) aufrastbar ist.
Ausführung 14: Steckverbinder gemäß Ausführung 13, wobei das Erweiterungselement (2) eine Rückwand (23) besitzt, und wobei das Erweiterungselement (2) zumindest ein Rückstellelement (3, 30, 30') zumindest teilweise aufnimmt und sich das Rückstellelement (3, 30, 30') an einer Rückwand (23) des Erweiterungselements (2) abstützt, um die besagte Rückstellkraft aufzubringen.

### Bezugszeichenliste

- 1, 1': (Lade-)Steckverbinder, Anbaustecker
- 10: Aktuator
- 11, 11', 11": Steckkontakte, Leistungskontakte, Schutzleiterkontakt, Signalkontakte
- 12: Kragen
- 120: Stecköffnung
- 13: Anbauflansch
- 130: Befestigungsöffnungen
- 14: Rastanformung
- 146: Basishalterung
- 15: Kontaktträgergehäuse
- 16, 16', 16": hohlzylindrische Anformungen
- 160, 160', 160": Kontaktkammern
- 18: Griff
- 19: Kabel
- 2: Erweiterungselement
- 23: Rückwand
- 24: Rastlasche
- 3: erstes Rückstellelement, Rückstellfeder
- 30', 30: zweites Rückstellelement, Magnetanordnung, erstes Magnetanordnungsteil, zweites Magnetanordnungsteil
- 4: Berührschutzelement
- 41: Stifte
- 42: Anschlag
- 43: Halteabschnitt
- 44: Verbindungsabschnitt
- 446: Führungsöffnungen
- 45: Dichtungsnut
- 46: Halterungen
- 463: Magnetaufnahmen
- 5, 5': erster, zweiter Dichtungsring
- 6: Führungsstifte
- Fs: erste Rückstellkraft/ Federkraft
- Fe: zweite Rückstellkraft / Magnetkraft

## Patentansprüche

1. Berührschutzelement (4, 4') für einen Steckverbinder (1, 1'), wobei das Berührschutzelement (4, 4') aus zumindest einem elektrisch isolierenden Material besteht und Folgendes aufweist:
- mehrere Stifte (41) zur zumindest teilweisen Anordnung innerhalb elektrischer Leistungskontakte (11) des Steckverbinders (1, 1') zur Herstellung eines elektrischen Berührschutzes mit zumindest einem dieser Leistungskontakte (11) in einer Ausgangslage des Berührschutzelements (4, 4') im Steckverbinder (1, 1');
- einen Verbindungsabschnitt (44, 44') zur Positionierung und Fixierung der Stifte (41);
- zumindest ein erstes Rückstellelement (3) zum Aufbau einer ersten Rückstellkraft und/oder zumindest ein zweites Rückstellelement (30, 30') zum Aufbau einer zweiten Rückstellkraft beim Verschieben des Berührschutzelements (4, 4') innerhalb des Steckverbinders (1, 1') und zur automatischen Rückführung des gesamten Berührschutzelements (4, 4') durch die erste und/oder zweite Rückstellkraft in seine Ausgangslage.

2. Berührschutzelement (4, 4') gemäß Anspruch 1, wobei das Berührschutzelement (4, 4') einstückig ausgeführt ist.

3. Berührschutzelement (4, 4') gemäß einem der vorstehenden Ansprüche, wobei das Berührschutzelement (4, 4') einteilig ausgeführt ist.

4. Berührschutzelement (4, 4') gemäß einem der vorstehenden Ansprüche, wobei das Berührschutzelement (4, 4') als Spritzgussteil ausgeführt ist und aus Kunststoff besteht.

5. Berührschutzelement (4, 4') gemäß einem der vorstehenden Ansprüche, wobei das Berührschutzelement (4, 4') das mindestens eine erste Rückstellelement (3) und das mindestens eine zweite Rückstellelement (30, 30') besitzt, wobei sich das erste (3) und das zweite (30, 30') Rückstellelement voneinander in ihrem Kraft-Weg-Diagramm unterscheiden.

6. Berührschutzelement (4, 4') gemäß einem der vorstehenden Ansprüche, wobei das erste Rückstellelement (3) ein im Wesentlichen lineares Kraft-Weg-Diagramm besitzt.

7. Berührschutzelement (4, 4') gemäß einem der vorstehenden Ansprüche, wobei das zweite Rückstellelement (30, 30') einen nichtlineares Kraft-Weg-Diagramm besitzt.

8. Berührschutzelement (4, 4') gemäß Anspruch 7, wobei das zweite Rückstellelement (30, 30') dafür sorgt, dass im Steckvorgang Anfangs eine höhere Kraft aufgewendet werden muss als im späteren Verlauf.

9. Berührschutzelement (4, 4') gemäß einem der vorstehenden Ansprüche, wobei das erste Rückstellelement als Rückstellfeder (3), bevorzugt als Wendelfeder (3), ausgeführt ist.

10. Berührschutzelement (4, 4') gemäß einem der vorstehenden Ansprüche, wobei das zweite Rückstellelement (30, 30') als Magnetanordnung (30, 30') ausgeführt ist, wobei die Magnetanordung (30, 30') ein erstes Magnetanordnungsteil (30') und ein zweites Magnetanordnungsteil (30) besitzt, wobei
o das erste Magnetanordnungsteil (30') ein Permanentmagnet und das zweite Magnetanordnungsteil (30) ein Metallteil ist,
oder wobei
o das erste Magnetanordnungsteil (30') ein Metallteil und das zweite Magnetanordnungsteil (30) ein Permanentmagnet ist,
oder wobei
o das erste Magnetanordnungsteil (30') ein Permanentmagnet und das zweite Magnetanordnungsteil (30) ebenfalls ein Permanentmagnet ist.

11. Berührschutzelement (4, 4') gemäß einem der vorstehenden Ansprüche, wobei das Berührschutzelement (4, 4') vier Stifte (41) besitzt, die über den Verbindungsabschnitt (44, 44') mechanisch miteinander verbunden sind.

12. Berührschutzelement (4, 4') gemäß einem der vorstehenden Ansprüche, wobei das Berührschutzelement (4, 4') zumindest zwei Halterungen (46) zur teilweisen Aufnahme je zumindest eines Teils (30) des zweiten Rückstellelements (30, 30') besitzt.

13. Berührschutzelement (4, 4') gemäß einem der vorstehenden Ansprüche, wobei das Berührschutzelement (4) für jeden Stift (41) einen ersten Dichtungsring (5) besitzt, und wobei jeder Stift (41) eine umlaufende Dichtungsnut (45) zur teilweisen Aufnahme des jeweiligen Dichtungsrings (5) besitzt.

14. Berührschutzelement (4) gemäß einem der vorstehenden Ansprüche, wobei zumindest zwei der Stifte (41) je einen Anschlag (42) und je einen an den Anschlag (42) anschließenden Halteabschnitt (43) zum Zusammenwirken mit dem ersten Rückstellelement (3) besitzen.

15. Berührschutzelement (4') gemäß einem der vorstehenden Ansprüche, wobei im Verbindungsabschnitt (44') zumindest eine Führungsöffnung (446) angeordnet ist, wobei das Berührschutzelement (4') mehrere Führungsstifte (6) besitzt, von denen je einer in jeweils einer der Führungsöffnungen (446) verschiebbar gehalten ist.

16. Berührschutzelement (4') gemäß Anspruch 15, wobei an jedem der Führungsstifte (6) ein erstes Rückstellelement (3) angeordnet und gehalten ist.

17. Steckverbinder (1, 1') aufweisend ein Berührschutzelement (4, 4') gemäß einem der vorstehenden Ansprüche, wobei der Steckverbinder (1, 1') weiterhin zumindest Folgendes besitzt:
- ein Gehäuse und
- einen Kontaktträger,
- als Durchgangsöffnungen ausgeführte Kontaktkammern (160), welche in eine Steckrichtung verlaufen;
- zumindest vier als Buchsenkontakte ausgeführte elektrische Leistungskontakte (11), die jeweils in einer der Kontaktkammern (160) angeordnet sind und zur Übertragung elektrischer Energie dienen, wobei
o jeder der Stifte (41) des Berührschutzelements (4, 4') in einem ungesteckten Ausgangszustand des Steckverbinders (1, 1') den jeweiligen Buchsenkontakt (11) durchgreift und steckseitig aus dem Buchsenkontakt (11) herausragt, wobei das gesamte Berührschutzelement (4, 4') entlang der Steckrichtung hin zur Anschlussseite entgegen einer ersten Rückstellkraft (Fs) des ersten (3) und/oder einer zweiten Rückstellkraft (F_{B}) des zweiten Rückstellelements (30, 30') verschiebbar gehalten ist.

18. Steckverbinder (1, 1') gemäß Anspruch 17, wobei der Steckverbinder (1, 1') als Ladesteckverbinder ausgeführt ist und zusätzlich noch einen Schutzleiterkontakt (11') sowie zwei Signalkontakte (11") besitzt.

19. Steckverbinder (1, 1') gemäß einem der Ansprüche 17 bis 18, wobei das Gehäuse und der Kontaktträger gemeinsam als ein einstückiges Bauteil, nämlich als Kontaktträgergehäuse (15) ausgeführt sind.

20. Steckverbinder (1, 1') gemäß einem der Ansprüche 17 bis 19, wobei der Steckverbinder (1, 1') zusätzlich ein Erweiterungselement (2) besitzt, welches zur kabelanschlussseitigen Erweiterung des Gehäuses dient.

21. Steckverbinder (1, 1') gemäß Anspruch 20, wobei das Erweiterungselement (2) kabelanschlussseitig an das Kontaktträgergehäuse (15) anfügbar und zur Befestigung am Kontaktträgergehäuse (15) auf das Kontaktträgergehäuse (15) reversibel befestigbar, also z.B. aufrastbar oder anschraubbar, ist.

22. Steckverbinder (1, 1') gemäß einem der Ansprüche 20 bis 21, wobei das Erweiterungselement (2) eine Rückwand (23) besitzt, und wobei das Erweiterungselement (2) zumindest das erste Rückstellelement (3) zumindest teilweise aufnimmt, wobei sich das erste Rückstellelement (3) und/oder das zweite (30, 30') Rückstellelement an einer Rückwand (23) des Erweiterungselements (2) abstützt, um die besagte erste Rückstellkraft (Fs) und/oder die besagte zweite Rückstellkraft (Fs) aufzubringen.
